# EUROPÄISCHE PATENTSCHRIFT

(11) **EP 0 345 698 B1**
(45) Veröffentlichungstag und Bekanntmachung des Hinweises auf die Patenterteilung: **18.11.1993**
(21) Anmeldenummer: 89110146.1
(22) Anmeldetag: 05.06.1989
(51) Int. Cl.: F24D 3/14

(54) **Anordnung zur Beheizung eines Bodens, insbesondere einer Freifläche**
Arrangement for heating a floor, particularly an open place
Disposition pour chauffer un plancher notamment un espace libre

(30) Priorität: 08.06.1988 DE 3819548
(43) Veröffentlichungstag der Anmeldung: 13.12.1989
(73) Patentinhaber: PVG Patent-Verwertungsgesellschaft mbH, 52388 Nörvenich (DE)
(72) Erfinder: Mühlbauer, Klaus G., D-5164 Nörvenich (DE)
(74) Vertreter: Reinhard - Skuhra - Weise & Partner

(56) Entgegenhaltungen:
- EP-A- 0 278 214
- CH-A- 209 133
- DE-A- 1 961 816
- FR-A- 886 546
- GB-A- 1 108 024
- US-A- 4 164 933

## Beschreibung

Die Erfindung betrifft eine Anordnung gemäß dem Oberbegriff des Patentanspruchs 1.

Eine Anordnung Zur Beheizung eines Bodens ist in der EP-A-278 214 (Stand der Technik nach Artikel 54 (3) EPÜ) vorgeschlagen. Hierbei sind die Heizungsrohre je zu beheizendem Feld in einem im wesentlichen mäanderförmigen Verlauf angeordnet. Dadurch wird erreicht, daß von der Mitte zugeführtes Heizmedium durch mäanderförmig verlegte Heizrohre zum einen Ende des Feldes geführt wird und von dort über über das Heizungsrohr zum anderen Ende des Feldes geleitet wird, von welchem es wiederum mit mäanderförmigem Verlauf zu etwa der Feldmitte zurückgeleitet wird.

Bei einer solchen Anordnung der Heizungsrohre wird die eine Hälfte des Feldes mit einem Heizmedium höherer Temperatur gegenüber der anderen Hälfte des Feldes beheizt und damit weist das Heizmedium in der zweiten Feldhälfte geringere Temperatur auf. Die beiden Hälften eines Feldes haben daher eine unterschiedliche Oberflächentemperatur. Dies kann bei Freiflächen dazu führen, daß bei deren Beheizung zum Zwecke einer Enteisung und/oder Schneeschmelze in ein und demselben Feld eine unterschiedlich schnell wirkende Beheizung erfolgt, d.h. in der einen Feldhälfte Eis und Schnee bereits beseitigt sind, während in der anderen Feldhälfte Eis und Schnee noch vorhanden sein können.

Aus der US-A-4 164 933 sind Sonnenkollektorplatten bekannt, die als einzelne Felder nebeneinanderliegend eine Dachfläche oder eine beheizbare Bodenfläche gemäß dem Oberbegriff des Patentanspruchs 1 ergeben. An den seitlichen Rändern sind Platten ausgespart, derart, daß in den Aussparungen die Zu- und Abführungsleitungen angeordnet werden können.

In der FR-A-886 546 sind Heizplatten aus ggf. in Beton eingießbaren Anordnungen von Heizschlangen beschrieben, die zueinander parallel verlaufende Zu- und Abflußleitungen (Fig. 3) enthalten. Heizplatten mit gegenläufigen Flüssigkeitsleitungen sind auch aus dieser Druckschrift bekannt.

Der Erfindung liegt die Aufgabe zugrunde, eine Anordnung der eingangs genannten Art derart auszubilden, daß eine weitgehend gleichmäßige Beheizung der Freifläche sichergestellt ist.

Diese Aufgabe wird erfindungsgemäß durch die Merkmale im kennzeichnenden Teil des Patentanspruchs 1 gelöst.

Weitere Ausgestaltungen der Anordnung ergeben sich aus den Unteransprüchen.

Mit der erfindungsgemäßen Anordnung wird eine weitgehend gleichmäßige Oberflächentemperatur über das gesamte Feld der zu beheizenden Freifläche sichergestellt. Auf diese Weise läßt sich vermeiden, daß bei der Beheizung der Freifläche in einem Bereich vorhandener Schnee lamgsamer wegschmilzt, als in anderen Bereichen, vielmehr erfolgt ein zeitlich und lokal gleichmäßiges Anschmelzen oder Enteisen über die gesamte Freifläche und insbesondere hinsichtlich beider Hälften eines Feldes.

Durch die Verlegung der Heizungsrohre nach Art eines sogenannten doppelten Mäanders, der vom Heizmedium gegenläufig durchflossen wird, werden die bei einem "einfachen" Mäander über das eine Feld auftretenden Temperaturdifferenzen des Heizmediums weitgehend kompensiert und eine gleichmäßige Beheizung der gesamten Oberfläche der Freifläche und insbesondere der beiden Hälften eines Feldes sichergestellt.

Die Speisung der mäanderförmig verlegten Heizungsrohre erfolgt durch Anbindeleitungen, die im mittig im Feld vertikal angeordnet und mit den Zu- und Abführungsleitungen verbunden sind. Die Zu- und Abführungsleitungen verlaufen zur Vermeidung einer Beeinträchtigung der zwischen den einzelnen Feldern vorgesehenen Ausdehnungsfugen unterhalb der die Heizungsrohre aufnehmenden Schicht.

Im folgenden wird die Erfindung anhand von Zeichnungen zur Erläuterung weiterer Merkmale beschrieben. Es zeigen:
- Fig. 1: eine schematische Draufsicht auf ein Feld einer beheizten Freifläche, und
- Fig. 2: eine schematische Vertikalschnittansicht zur Erläuterung der Zu- und Abführungsleitungen und Anbindeleitungen, über welche die Heizungsrohre gespeist sind.

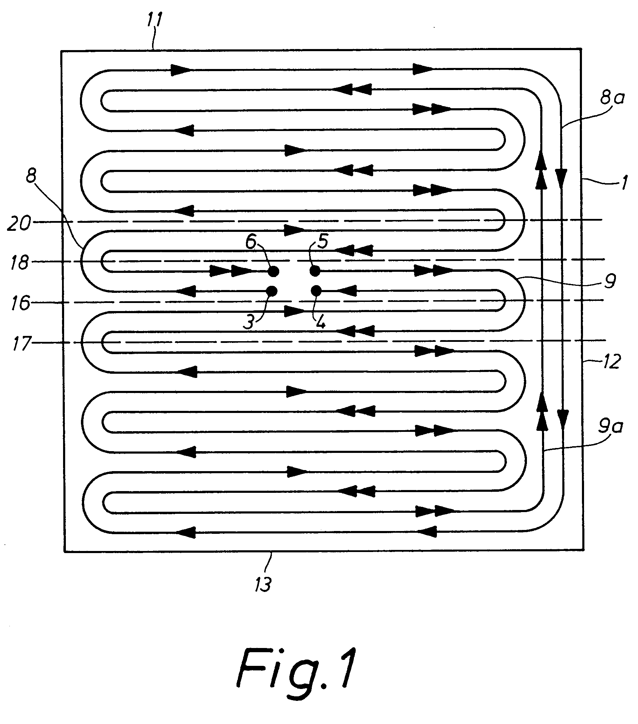

Fig. 1 zeigt ein Feld einer beheizten Freifläche, das in der Praxis beispielsweise die Größe von 6 x 6 m hat und als Betonfeld oder Heizkreisfeld bezeichnet wird. Ersichtlicherweise besteht die gesamte Freifläche vorzugsweise aus einer Mehrzahl derartiger beheizter Felder.

In dem in Fig. 1 gezeigten Feld 1 sind mittig vier Anschlüsse 3, 4, 5, 6 vorgesehen, von denen der Anschluß 3 als Vorlaufanschluß und der Anschluß 4 als Rücklaufanschluß für einen mit 8 bezeichneten ersten Heizkreis dienen. Der mit 5 bezeichnete Anschluß ist als Vorlaufanschluß und der mit 6 bezeichnete Anschluß als Rücklaufanschluß für einen mit 9 angegebenen Heizkreis vorgesehen. Der Heizkreis 8 hat im wesentlichen mäanderförmigen Verlauf, dergestalt, daß vom Anschluß 3 der Heizkreis 8 mäanderförmig zu einer Stirnseite 11 des Feldes 1 verläuft. Von der Stirnseite 11 erstreckt sich der Heizkreis 8 mittels eines Heizkreisabschnittes 8a entlang des mit 12 bezeichneten Feldrandes praktisch parallel zum Feldrand 12 zur gegenüberliegenden Stirnseite 13, wie durch den Abschnitt 8a angedeutet ist. Dann verläuft der Heizkreis mäanderförmig zum Anschluß 4 zurück. Der zweite Heizkreis 9 geht vom Anschluß 5 mäanderförmig zur Stirnseite 13. Von der Stirnseite 13 verläuft der Heizkreis 9 über einen Heizkreisabschnitt 9a zur gegenüberliegenden Stirnseite 11 und endet nach einem anschließenden mäanderförmigen Abschnitt am Anschluß 6.

Vorstehende Erläuterung zeigt, daß die beiden Heizkreise 8, 9 praktisch parallel zueinander verlaufen. Das Heizmedium fließt in den beiden Heizkreisen 8, 9 gegenläufig, d.h. das Heizmedium strömt vom Anschluß 3 in den Heizkreis 8 und wird am Anschluß 4 zurückgeführt, während das Heizmedium des Heizkreises 8 vom Anschluß 5 in den Heizkreis hineingeführt und am Anschluß 6 wieder aus dem Heizkreis 9 herausgeführt wird. Damit strömt vom Anschluß 3 in den Heizkreis 8 ein Heizmedium hoher Temperatur und aus dem Heizkreis 9 zum Anschluß 6 ein Heizmedium mit niederer Temperatur. Entsprechend umgekehrte Verhältnisse liegen an den Anschlüssen 4, 5 vor. Betrachtet man die Verhältnisse des Feldes 1, so ergibt sich für den durch die gestrichelten Linien 16 und 17 definierten Feldbereich folgendes: Die in dem Feldabschnitt zwischen den Linien 16, 17 liegenden Abschnitte des Heizkreises 8 befinden sich auf einer vergleichbar niederen, bereits abgekühlten Temperatur. Die dem Heizkreis 9 zugehörigen Abschnitte führen dagegen ein Heizmedium, das ungefähr die Vorlauftemperatur hat. Dieser Abschnitt des Heizkreises 9 mit der (höheren) Vorlauftemperatur gleicht die niedrigere Temperatur des parallel daneben befindlichen Heizkreises 8 aus. In dem Feldabschnitt, der durch die gestrichelten Linien 18 und 20 in Fig. 1 bestimmt ist, sind die Verhältnisse umgekehrt, d.h. die Erwärmung erfolgt insbesondere durch die Vorlauftemperatur des Heizkreises 8, während das Heizmedium des Heizkreises 9, das sich nahezu auf Rücklauftemperatur befindet, weniger wirksam ist. Auf diese Weise wird mithin erreicht, daß kein Abschnitt des Feldes 1 ausschließlich durch eine vergleichbar niedrige Temperatur, z.B. eine Temperatur, die nahezu der Rücklauftemperatur des Heizmediums entspricht, beheizt wird. Die Oberflächentemperatur ist daher über das gesamte Feld hinweg ungefähr konstant bz.w gleich. Diese Verlgeichmäßigung der Oberflächentemperatur wird über das gesamte Feld sichergestellt und es erfolgt eine zeitlich gleichmäßige Aufheizung. Bei Eis und Schnee ist also eine gleichmäßige Enteisung bzw. Anschmelzung von Schnee gegeben.

Die Ansteuerung der beiden mäanderförmig verlegten Heizkreise erfolgt mittig vom Feld 1 aus, wie dies in Fig. 1 gezeigt ist.

Die Heizkreise 8, 9 sind durch Heizungsrohre vorzugsweise aus Kunststoff-Hiezungsrohren gebildet.

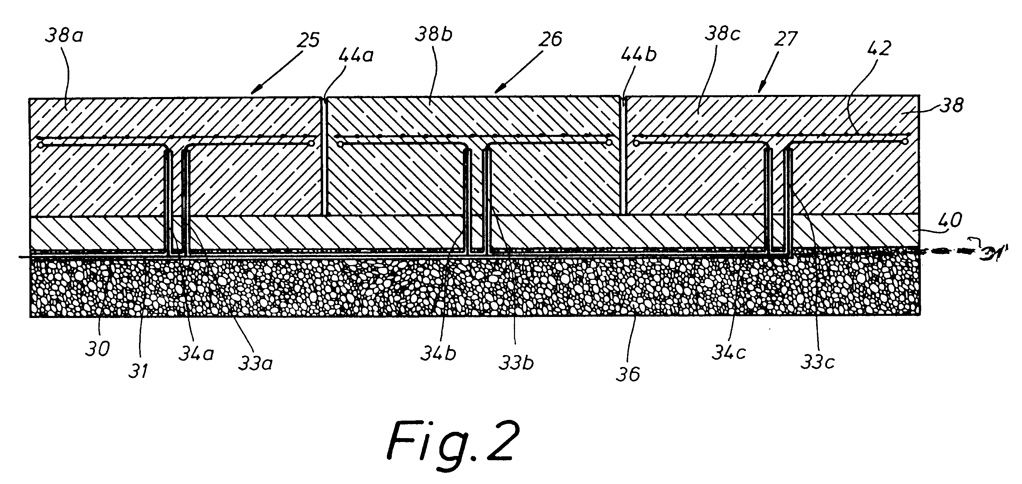

Im folgenden wird unter Bezugnahme auf Fig. 2 die Art und Weise des Anschlusses der Heizkreise bei einer Freiflächenheizung erläutert. Derartige Freiflächenheizungen werden z.B. bei Flughäfen verwendet. Die gesamte Freiflächenheizung besteht aus einer Mehrzahl von Feldern mit einer Größe von jeweils beispielsweise 6 x 6 m. Fig. 2 zeigt drei derartige Felder 25, 26, 27. Das mit 26 bezeichnete Feld stellt ein Mittelfeld dar, die Felder 25 und 27 sind Außenfelder. Sämtliche Heizkreise, die in Fig. 2 je Feld 25, 26, 27 schematisch angedeutet sind und im wesentlichen der in Verbindung mit Fig. 1 beschriebenen Anordnung entsprechen, sind durch eine Unterflur-Anbindung mit einem Fernheizrohrvorlauf und einem Fernheizrohrrücklauf verbunden. Der Anschluß erfolgt durch Zuführungsleitungen und Abführungsleitungen 30, 31. Die Zuführungsleitung weist mehrere Abzweigungen in Form von Anbindungsleitungen 33a, 33b, 33c auf, die jeweils zum Vorlaufanschluß des zugehörigen Heizkreisfeldes verlaufen, sowie Anbindungsleitungen 34a, 34b, 34c, die eine Verbindung zwischen dem Rücklaufanschluß 4 bzw. 6 und der zugehörigen Abführungsleitung herstellen. Die Zuführungs- und Abführungsleitungen 30, 31 verlaufen in einer horizontalen Ebene, vorzugsweise innerhalb einer Kiesschicht 36 und auf jeden Fall unterhalb der die jeweiligen Heizkreise 8, 9 aufnehmenden Schicht 38 aus Beton oder dergleichen. Bei der Ausführungsform nach Fig. 2 schließt sich an die die Zu- und Abführungsleitungen 30, 31 aufnehmende Kiesschicht 36 eine Tragschicht 40 an, die vorzugsweise aus Beton (Magerbeton oder Walzbeton) besteht und durch die Anbindeleitungen 33, 34 bereichsweise durchsetzt ist. Sowohl die Anbindeleitungen 33, 34 als auch die Zu- und Abführungsleitungen 30, 31 sind vorzugsweise mit einer wärmedämmenden Ummantelung versehen.

Die Stärke der Schicht 38 hängt von den Belastungsanforderungen ab und kann gemäß Fig. 2 ein Bewehrungsgitter 42 enthalten, oberhalb oder vorzugsweise unterhalb welchem die Heizkreise 8, 9 angeordnet sind. Zwischen den Feldern 25 und 26 sowie 26 und 27 sind Dehnungsfugen 44a, 44b vorgesehen, die vertikal zwischen der Tragschicht 40 und der Oberfläche der Felder 25, 26, 27 verlaufen. Diese Ausdehnungsfugen 44a, 44b werden durch die Unterfluranbindungen der beschriebenen Heizkreise nicht beeinträchtigt.

Aus der vorstehenden Beschreibung in Verbindung mit Fig. 1 und 2 ist ersichtlich, daß im Gegensatz zur schematischen Darstellung nach Fig. 2 für jeden einzelnen Heizkreis jedes Feldes Anbindungsleitungen vorzusehen sind, auch wenn diese in Fig. 2 nicht gezeigt sind.

Aus Fig. 2 ist ersichtlich, daß bei der gezeigten Schnittdarstellung die Zuführleitung 30 und die Ablaufleitung 31 in Fig. 2 an der linken Seite, d.h. an einem gemeinsamen Bereich, vorgesehen sind. Gemäß einer weiteren Abwandlung kann die den Rücklauf darstellende Ablaufleitung auf der zur Zuführleitung 30 gegenüberliegenden Seite einer Einheit ausgebildet sein, wie dies durch das Bezugszeichen 31′ in Fig. 2 auf der rechten Seite dargestellt ist.

## Patentansprüche

1. Anordnung zur Beheizung eines Bodens, insbesondere einer Freifläche, die aus wenigstens einer Schicht aus Beton oder dergleichen besteht,
wobei die Schicht in einzelne Felder unterteilt und die Felder durch weitgehend vertikal verlaufende Fugen getrennt sind,
bei der unterhalb der Schicht (en) (38, 38a, 38b, 38c) verlaufende Zu- und Abführungsleitungen (30, 31) vorgesehen sind, die mit innerhalb der obersten Schicht angeordneten Heizkreisen (8, 9) in Verbindung stehen,
**dadurch gekennzeichnet**,
daß jedes Feld (1; 25, 26, 27) zwei gegenläufige Heizkreise (8, 9) aufweist und
daß die Anschlüsse (3, 5 bzw. 4, 6) für Vorlauf bzw. Rücklauf mittig in jedem Feld (1; 25, 26, 27) vorgesehen sind.

2. Anordnung nach Anspruch 1,
**dadurch gekennzeichnet**,
daß die Anschlüsse (3, 5 bzw. 4, 6) mit mittig in jedem Feld vertikal angeordneten Anbindeleitungen (33a, 33b, 33c, 34a, 34b, 34c) verbunden sind.

3. Anordnung nach Anspruch 1 oder 2,
**dadurch gekennzeichnet**,
daß die Heizkreise (8, 9) von den Anschlüssen (3, 5 bzw. 4, 6) mäanderförmig weg verlaufen und daß zwischen den Enden des mäanderförmigen Verlaufes ein praktisch parallel zum Feldrand (12) verlaufender Heizkreisabschnitt (8a, 9a) vorgesehen ist.

4. Anordnung nach Ansprüche 2 oder 3
**dadurch gekennzeichnet**,
daß die Anbindeleitungen (33a, 33b, 33c, 34a, 34b, 34c) die die Heizkreise (8, 9) aufnehmende Schicht (38) aus Beton oder dergleichen und eine darunterliegende Tragschicht (40) sowie eine Kiesschicht (36) durchsetzen.

5. Anordnung nach Ansprüche 2 bis 4
**dadurch gekennzeichnet**,
daß die Anbindeleitungen (33a, 33b, 33c, 34a, 34b, 34c) mit Zuführungs- und Abführungsleitungen (30, 31) verbunden sind, die in einer horizontalen Ebene unterhalb der die Heizkreise (8, 9) aufnehmenden Schicht (38) verlaufen.

6. Anordnung nach Anspruch 1,
**dadurch gekennzeichnet**,
daß die beiden Heizkreise (8, 9) im wesentlichen parallel zueinander verlaufend vorgesehen sind.

7. Anordnung nach einem der vorangehenden Ansprüche,
**dadurch gekennzeichnet**,
daß die Heizkreise (8, 9) unterhalb oder oberhalb eines Bewehrungsgitters (42) angeordnet sind.

## Claims

1. Arrangement for heating a floor, particularly an open place, consisting of at least one layer of concrete or the like,
the layer being subdivided into individual sections and the sections being separated from each other by more or less vertically arranged joints,
with inlet and outlet channels (30, 31) provided below the layer(s) (38, 38a, 38b, 38c) being connected with the heating circuits (8, 9) provided in the upper layer, **characterized in that** each section (1; 25, 26, 27) has two heating circuits (8, 9) working in opposite direction, and
that the connections (3, 5 or 4, 6, respectively) for forward and backward motion are provided in the center of each section (1; 25, 26, 27).

2. Arrangement according to claim 1, characterized in that the connections (3, 5 or 4, 6, respectively) are connected with ducts (33a, 33b, 33c, 34a, 34b, 34c) provided vertically in the center of each section.

3. Arrangement according to claim 1 or 2, characterized in that the heating circuits (8, 9) leave the ducts (3, 5 or 4, 6, respectively) in a meander pattern and that between the ends of the meander pattern there is provided a heating circuit section (8a, 9a) running more or less parallel to the edge of the section (12).

4. Arrangement according to claim 2 or 3, characterized in that the connecting ducts (33a, 33b, 33c, 34a, 34b, 34c) run through the layer (38) of concrete or the like incorporating the heating circuits (8, 9) and a supporting layer (40) as well as a gravel layer (36) being provided below it.

5. Arrangement according to claims 2 to 4, characterized in that the connecting ducts (33a, 33b, 33c, 34a, 34b, 34c) are connected with inlet and outlet ducts (30, 31) being provided in a horizontal plane below the layer (38) incorporating the heating circuits (8, 9).

6. Arrangement according to claim 1, characterized in that the two heating circuits (8, 9) are provided essentially parallel to each other.

7. Arrangement according to one of the preceding claims, characterized in that the heating circuits (8, 9) are provided below or above of a reinforcement grid (42).

## Revendications

1. Dispositif de chauffage d'un sol, notamment d'une surface à l'air libre, qui est constitué d'au moins une couche en béton ou analogue, la couche étant divisée en différentes zones et les zones étant séparées par des joints s'étendant d'une manière approximativement verticale, dans lequel il est prévu des tuyauteries d'amenée et d'évacuation (30, 31) qui s'étendent au-dessous de la couche ou des couches (38, 38a, 38b, 38c) et qui sont raccordées à des circuits de chauffe (8, 9) disposés à l'intérieur de la couche supérieure, caractérisé en ce que chaque zone (1 ; 25, 26, 27) comporte deux circuits de chauffe (8, 9) à sens de circulation opposés et en ce que les raccords (3, 5 et 4, 6) correspondant respectivement à la circulation d'arrivée et à la circulation de retour sont prévus au milieu de chaque zone (1 ; 25, 26, 27).

2. Dispositif suivant la revendication 1, caractérisé en ce que les raccords (3, 5, 4, 6) sont raccordés à des tuyauteries de jonction (33a, 33b, 33c, 34a, 34b, 34c) disposées verticalement au milieu de chaque zone.

3. Dispositif suivant l'une des revendications 1 et 2, caractérisé en ce que les circuits de chauffe (8, 9) s'éloignent des raccords (3, 5, 4, 6) suivant des tracés se dirigeant alternativement dans un sens et dans l'autre et en ce qu'entre les extrémités du tracé s'étendant alternativement dans un sens et dans l'autre, il est prévu un tronçon de circuit de chauffe (8a, 9a) qui s'étend d'une manière pratiquement parallèle au bord (12) de la zone.

4. Dispositif suivant l'une des revendications 2 et 3, caractérisé en ce que les tuyauteries de jonction (33,, 33b, 33c, 34a, 34b, 34c) traversent la couche (38) en béton ou analogue contenant les circuits de chauffe (8, 9) et une couche de fondation (40) située au-dessous, ainsi qu'une couche de gravier (36).

5. Dispositif suivant l'une des revendications 2 à 4, caractérisé en ce que les tuyauteries de jonction (33a, 33b, 33c, 34a, 34b, 34c) sont raccordées à des tuyauteries d'amenée et d'évacuation (30, 31) qui s'étendent dans un plan horizontal au-dessous de la couche (38) contenant les circuits de chauffe (8, 9).

6. Dispositif suivant la revendication 1, caractérisé en ce que les deux circuits de chauffe (8, 9) s'étendent d'une manière pratiquement parallèle l'un à l'autre.

7. Dispositif suivant l'une des revendications précédentes, caractérisé en ce que les circuits de chauffe (8, 9) sont disposés au-dessous ou au-dessus d'une grille d'armature (42).
